# EUROPEAN PATENT APPLICATION

(11) **EP 3 064 269 A1**
(43) Date of publication of application: **07.09.2016**
(21) Application number: 14858782.7
(22) Date of filing: 30.10.2014
(51) Int. Cl.: B01J 19/22, B01J 19/08, C08L 33/08

(54) **APPARATUS FOR MANUFACTURING HIGH ABSORBENT RESIN AND METHOD FOR MANUFACTURING HIGH ABSORBENT RESIN USING SAME**

(30) Priority: 31.10.2013 KR 20130131432
(71) Applicant: Hanwha Chemical Corporation, Seoul 100-797 (KR)
(72) Inventor: LEE, Min Ho, Pohang-si Gyeongsangbuk-do 791-786 (KR); KIM, Eui Duk, Daejeon 305-720 (KR); KIM, Ji Yeon, Dalseong-gun Daegu 711-765 (KR); PAIK, Choong Hoon, Daejeon 305-720 (KR); SIM, Yu Jin, Daejeon 305-720 (KR); OH, Seok Heon, Daejeon 305-720 (KR); CHOI, Dae Keon, Jeonju-si Jeollabuk-do 560-792 (KR)
(74) Representative: Glawe, Delfs, Moll
(86) International application number: PCT/KR2014/010277
(87) International publication number: WO 2015/065054

(57) **Abstract**

An apparatus for manufacturing a super absorbent polymer, comprising: a belt installed over two or more rotary shafts and moved in a predetermined direction by the rotation of the rotary shafts; a supply unit supplying a monomer composition to the belt; and a cover covering at least a part of the belt and passing the belt from one side thereof to the other side thereof, wherein the belt includes a horizontal bottom, and lateral jaws provided at both ends of the belt at an angle of 30° to 70° to the horizontal bottom, and the cover includes heat inlets for supplying heat into the coverat both lateral sides thereof.

## Description

### TECHNICAL FIELD

The present invention relates to a method for manufacturing a super absorbent polymer and an apparatus for manufacturing a super absorbent polymer using the same.

### BACKGROUND ART

Super absorbent polymers (SAPs) are synthetic polymer materials having a function of absorbing moisture of 500 to 1000 times their own weight, and have been differently named as super absorbent material (SAM), absorbent gel material (AGM), and the like depending on developers. Such super absorbent polymers have been widely used as materials in the fields of water retaining agents for soils, waterstops for civil engineering and construction, sheets for seeding, and goods for food distribution as well as hygienic goods such as paper diapers for babies since they started to put into practical use.

As the method of manufacturing a super absorbent polymer, reverse phase suspension polymerization, aqueous solution polymerization, or the like is known. The reverse phase suspension polymerization is disclosed in JP-S-56-161408, JP-S-57-158209, and JP-S-57-198714. As the aqueous solution polymerization, thermopolymerization in which polymerization is performed by heating an aqueous solution, photopolymerization in which polymerization is performed by ultraviolet (UV) irradiation, and the like are known.

In the related art, when heat for thermopolymerization is supplied, hot air is blown onto an aqueous solution from the upper portion of a belt carrying the aqueous solution.

In this case, since the level of the aqueous solution is non-uniformly formed due to the hot air and polymerization is performed in a state in which the level of the aqueous solution is non-uniform, the height of a polymer obtained after the polymerization also becomes non-uniform.Thus, there occurs a problem that, when the polymer is pulverized later by a precutter, one side of the precutter is overloaded. Further, there is a problem that the exhaustion in a polymerization reactor is not easily performed.

### Disclosure

### TECHNICAL PROBLEM

An object to be achieved by the present invention is to provide an apparatus for manufacturing a super absorbent polymer having a uniform height and a method for manufacturing a super absorbent polymer using the same.

However, objects of the present invention are not restricted to the one set forth herein. The above and other aspects of the present invention will become more apparent to one of ordinary skill in the art to which the present invention pertains by referencing the detailed description of the present invention given below.

### TECHNICAL SOLUTION

According to an exemplary embodiment of the invention, an apparatus for manufacturing a super absorbent polymer, comprise a belt installed over two or more rotary shafts and moved in a predetermined direction by the rotation of the rotary shafts, a supply unit supplying a monomer composition to the belt, and a cover covering at least a part of the belt and passing the belt from one side thereof to the other side thereof, wherein the belt includes a horizontal bottom, and lateral jaws provided at both ends of the belt at an angle of 30° to 70° to the horizontal bottom, and the cover includes heat inlets for supplying heat into the coverat both lateral sides thereof.

The cover may further include a light irradiation unit for emitting light to the inside thereof.

The light irradiation unit may emit ultraviolet rays from the top portion of the cover.

The light irradiation unit may be at least one selected from the group consisting of a Xe lamp, a mercury lamp, and a metal halide lamp.

The cover may further include an outlet.

The outlet may be located at the top portion of the cover.

Each of the lateral jaws of the belt may be made of at least one selected from the group consisting of silicone, rubber, and Teflon.

The apparatus may further comprise a discharge unit for discharging a polymer obtained by the polymerization of the monomer composition.

According to an exemplary embodiment of the invention, a method for manufacturing a super absorbent polymer using the apparatus of the invention, comprise, supplying the monomer composition onto the bottom of the belt through the supply unit, carrying the belt into the cover, and polymerizing the monomer composition in the cover.

The monomer composition may include one or more anionic monomers or salts thereof selected from the group consisting of acrylic acid, methacrylic acid, anhydrous maleic acid, fumaric acid, crotonic acid, itaconic acid, 2-acry-loylethanesulfonic acid, 2-methacryloylethanesulfonic acid, 2-(meth)acryloylpropane sulfonic acid, and 2-(meth)acrylamide-2-methylpropane sulfonic acid; one or more non-ionic monomers having hydrophilicity selected from the group consisting of (meth)acrylamide, N-substituted (meth)acrylate, 2-hydroxyethyl (meth)acrylate, 2-hydroxypropyl (meth)acrylate, methoxy polyethylene glycol (meth)acrylate, and polyethylene glycol (meth)acrylate; or one or more unsaturated monomers containing an amino group or quaternary salts thereof selected from the group consisting of (N,N)-dimethylaminoethyl (meth)acrylate and (N,N)-dimethylaminopropyl (meth)acrylamide.

The monomer composition may further include at least one additive selected from the group consisting of a photopolymerization initiator, a thermopolymerization initiator, and a cross-linker.

The polymerizing of the monomer composition may be performed by thermopolymerization, photopolymerization, or thermopolymerization and photopolymerization.

The method may further comprise, discharging the polymer formed in the polymerizing of the monomer composition through the discharge unit.

The method may further comprise, cutting the polymer discharged through the discharge unit, drying the cut polymer, and pulverizing the dried polymer.

Specific details of other embodiments are included in the detailed description and drawings.

### ADVANTAGEOUS EFFECTS

According to embodiments of the present invention, there are following effects.

A polymer having a uniform height can be obtained by introducing hot air in a horizontal direction from both sides, and a polymerization rate can be improved by forming a vortex flow in a polymerization reactor.

The effects of the present invention are not limited to the above-described effects, and other various effects are anticipated herein.

### DESCRIPTION OF DRAWINGS

The above and other aspects and features of the present invention will become more apparent by describing in detail exemplary embodiments thereof with reference to the attached drawings, in which:
FIG. 1 is a schematic side view of an apparatus for manufacturing a super absorbent polymer according to an embodiment of the present invention;
FIG. 2 is a schematic sectional view taken along the line A-A' of FIG. 1 according to an embodiment of the present invention; and
FIG. 3 is a schematic sectional view taken along the line A-A' of FIG. 1 according to another embodiment of the present invention.

### BEST MODE FOR INVENTION

Features of the invention and methods of accomplishing the same may be understood more readily by reference to the following detailed description of preferred embodiments and the accompanying drawings.

The invention may, however, be embodied in many different forms and should not be construed as being limited to the embodiments set forth herein. Rather, these embodiments are provided so that this disclosure will be thorough and complete and will fully convey the concept of the invention to those skilled in the art, and the invention will only be defined by the appended claims. Like numbers refer to like elements throughout. In the drawings, the thickness of layers and regions are exaggerated for clarity.

It will be understood that when an element or layer is referred to as being "on," another element or layer, the element or layer can be directly on another element or layer or intervening elements or layers. In contrast, when an element is referred to as being "directly on," another element or layer, there are no intervening elements or layers present.

Spatially relative terms, such as "below," "lower," "under," "above," "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures.

It will be understood that, although the terms first, second, etc., may be used herein to describe various elements and/or components, these elements and/or components should not be limited by these terms. These terms are only used to distinguish one element and/or component from another element and/or component. Thus, a first element or component discussed below could be termed a second element or component without departing from the teachings of the invention.

### Apparatus for manufacturing super absorbent polymer

Hereinafter, preferred embodiments of the present invention will be described in detail with reference to the accompanying drawings.

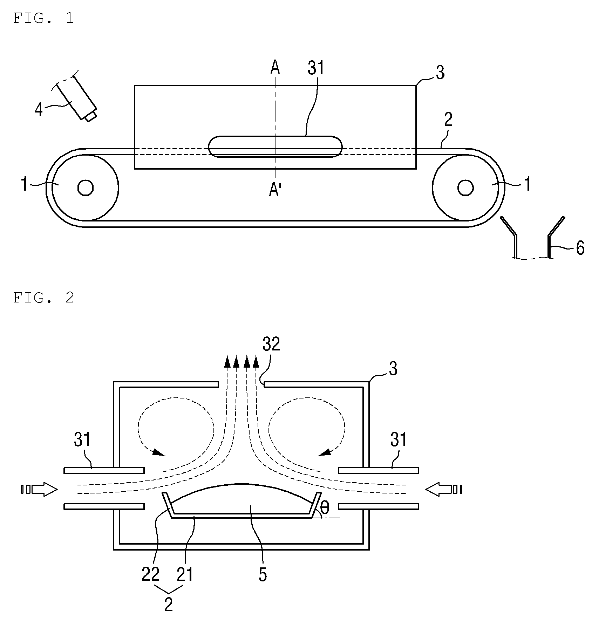

FIG. 1 is a schematic side view of an apparatus for manufacturing a super absorbent polymer according to an embodiment of the present invention.

Referring to FIG. 1, the apparatus for manufacturing a super absorbent polymer includes a belt 2 installed over two rotary shafts 1 and moved in a predetermined direction by the rotation of the rotary shafts 1, a supply unit 4 supplying a monomer composition 5 to the belt 2, and a cover 3 covering at least a part of the belt 2 and passing the belt 2 from one side thereof to the other side thereof.

As the rotary shafts 1, two or more rotary shafts may be equipped depending on the length of the belt 2 and the application method thereof. The rotary shafts 1 may be connected with a power source, such as a motor, to allow the belt 2 to move in a predetermined direction. In exemplary embodiment, the rotary shafts may be located at the same height based on the horizontal plane, but, in some cases, may be designed to be respectively provided at different height to form an inclination between the horizontal plane and the moving direction of the belt 2.

The supply unit 4 serves to supply the monomer composition 5 containing compounds necessary for a polymerization reaction to the belt 2, and the feed rate of the monomer composition 5 may be appropriately designed in consideration of the length, width and moving speed of the belt, the irradiation time and irradiation intensity of hot air or light, and the like.

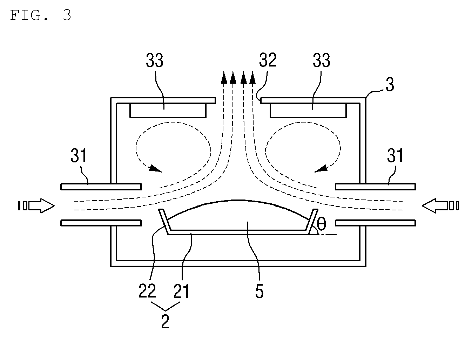

The belt 2 is connected between the rotary shafts 1 and moved in a predetermined direction to allow the monomer composition 5 to be subjected to a polymerization reaction through heat or light. Referring to FIGS. 2 and 3, the belt 2 includes a horizontal bottom 21, and lateral jaws 22 provided at both ends of the belt 2 at an angle of 30° to 70° to the horizontal bottom 21. Since the belt 2 has the horizontal bottom 21, the monomer composition 5 is uniformly supplied onto the horizontal bottom 21, so as to effectively perform a polymerization reaction. The width and length of the horizontal bottom may be selected and applied without limitations.

When the inclination angle (θ) of each of the lateral jaws 22 to the horizontal bottom 21 is in a range of 30° to 70°, it is possible to prevent the horizontal length of the belt 2 from excessively becoming long, and it is possible to prevent the lifespan of the belt 2 from being reduced when performing the curved motion of the belt 2 adjacent to the rotary shafts 1.

The lateral jaws 22 may be formed by stretching the material of the belt 2, and may also be made of a material having suitable durability, corrosion resistance and strength. In exemplary embodiment, the lateral jaws 22 may be made of silicone, rubber, Teflon or the like, but the present invention is not limited thereto.

The cover 3 is provided at both lateral sides thereof with heat inlets 31 for supplying hot air into the cover 3.

Hot air is supplied into the cover 3 through the heat inlets 31, thereby enabling the thermopolymerization of the monomer composition 5. In this case, the hot air supplied into the cover 3 through the heat inlets 31 may be supplied in a horizontal direction, and may also be supplied upward or downward at a predetermined angle to the horizontal direction.

The apparatus for manufacturing a super absorbent polymer may further include a discharge unit 6 for discharging a polymer obtained by the polymerization of the monomer composition 5. After the polymer resulting from the polymerization of the monomer composition 5 is discharged through the discharge unit 6, subsequent pulverizing and drying processes are conducted.

FIG. 2 is a schematic sectional view taken along the line A-A' of FIG. 1 according to an embodiment of the present invention.

Referring to FIG. 2, in the cover 3, the belt 2 including the monomer composition 5 provided thereon is moved, and hot air is supplied to the monomer composition 5 through the heat inlets 31 provided at both lateral sides of the cover 3. Here, the outer surface of each of the heat inlets 31 may be connected to a heat generating unit (not shown) or the like.

The hot air supplied to the inside of the cover 3 from the outside of the cover 3 collides with each other over the monomer composition 5 to rise upward, so as to be easily discharged through a outlet 32. Further, a part of the hot air forms a vortex flow along the inner wall of the cover 3, so as to improve heat transfer efficiency.

Duet to this configuration, a phenomenon of the thickness of both ends of a polymer becoming thin can be prevented, and the amount of remaining monomers can be reduced.

FIG. 3 is a schematic sectional view taken along the line A-A' of FIG. 1 according to another embodiment of the present invention.

Referring to FIG. 3, the cover 3 additionally includes light irradiation units 33 for emitting light to the inside of the cover 3. The light irradiation units 33 serves to initiate a polymerization reaction by emitting light to the monomer composition 5 provided on the belt 2. The configuration of each of the light irradiation units 33 is not limited as long as light is uniformly transferred onto the belt 2. In exemplary embodiment, the light irradiation units 33 may be located on the inner surface of the top portion of the cover 3, and, specifically, may be configured to face the upper portion of the monomer composition 5, but the present invention is not limited thereto.

The light irradiation units 33 can be used without limitation as long as a polymerization reaction can be initiated by the irradiation of light, but, for example, may be configured in the form of emitting ultraviolet rays to the monomer composition 5 from the top portion of the cover 3. The light irradiation units 33 can be used without limitation as long as ultraviolet rays can be emitted, but, for the purpose of the uniform irradiation of ultraviolet rays and the efficiently of a process, an ultraviolet light source, such as a Xe lamp, a mercury lamp or a metal halide lamp, may be used as the light irradiation unit 33.

In the photopolymer reaction initiated by the irradiation of ultraviolet rays, the wavelength of ultraviolet rays is not particularly limited, but, for example, may be in a range of 200 nm to 400 nm. The irradiation time of ultraviolet rays is not particularly limited, but, for example, may be in a range of 10 seconds to 5 minutes. In exemplary embodiment, the irradiation time thereof may be in a range of 20 seconds to 3 minute, but is not limited thereto. The irradiation intensity of ultraviolet rays may be in a range of 0.5 mw/cm² to 500 mw/cm². Within the above ranges, an effective polymerization reaction can be performed, and the cutting of the crosslinking point of a polymer due to excessive irradiation can be prevented.

However, ultraviolet ray irradiation time and irradiation intensity may have an interdependent inversely-proportional relationship. The range of causing an effective polymerization reaction may also be selected from the above ranges.

### Method for manufacturing a super absorbent polymer

A method for manufacturing a super absorbent polymer according to an embodiment of the present invention will be described with reference to FIGS. 1 to 3.

The method for manufacturing a super absorbent polymer using the above-described apparatus for manufacturing a super absorbent polymer includes the steps of: supplying the monomer composition 5 onto the bottom 21 of the belt 2 through the supply unit 4; carrying the belt 2 into the cover 3; and polymerizing the monomer composition 5 in the cover 3.

The monomer composition 5 may be supplied at a suitable feed rate in consideration of the width, length and moving speed of the belt 2 and the irradiation time, irradiation range and irradiation intensity of heat and/or light.

As the monomer contained in the monomer composition 5, a water-soluble unsaturated ethylene-based monomer can be used without limitation as long as it is generally used in the manufacture of a super absorbent polymer. The monomer may include one or more selected from the group consisting of anionic monomers and salts thereof, non-ionic monomers having hydrophilicity, and unsaturated monomers containing an amino group and quaternary salts thereof.

In exemplary embodiment, examples of the monomer may include: on or more anionic monomers or salts thereof selected from the group consisting of acrylic acid, methacrylic acid, anhydrous maleic acid, fumaric acid, crotonic acid, itaconic acid, 2-acryloylethanesulfonic acid, 2-methacryloylethanesulfonic acid, 2-(meth)acryloylpropane sulfonic acid,and 2-(meth)acrylamide-2-methylpropane sulfonic acid; one or more non-ionic monomers having hydrophilicity selected from the group consisting of (meth)acrylamide, N-substituted (meth)acrylate, 2-hydroxyethyl (meth)acrylate, 2-hydroxypropyl (meth)acrylate, methoxy polyethylene glycol (meth)acrylate, and polyethylene glycol (meth)acrylate; and one or more unsaturated monomers containing an amino group or quaternary salts thereof selected from the group consisting of (N,N)-dimethylaminoethyl (meth)acrylate and (N,N)-dimethylaminopropyl (meth)acrylamide.

The concentration of the water-soluble unsaturated ethylene-based monomer in the monomer composition 5 may be appropriately selected and used in consideration of polymerization time and reaction conditions (the feed rate of the monomer composition, the irradiation time, irradiation range and irradiation intensity of heat and/or light, and the width, length and moving speed of the belt). In exemplary embodiment, the concentration thereof may be in a range of 40 wt% to 60 wt%. In this case, it is efficient in terms of solubility of the monomer and economical aspects.

The monomer composition 5 may further include at least one additive selected from the group consisting of a photopolymerization initiator, a thermopolymerization initiator, and a cross-linker. The polymerization initiator can be suitably selected from a photopolymerization initiator, a thermopolymerization initiator, and a photopolymerization initiator and a thermopolymerization initiator depending on the kind of polymerization.

The photopolymerization initiator is not particularly limited, but examples thereof may include, but are not limited to, acetophenone derivatives, such as diethoxyacetophenone, 2-hydroxy-2-methyl-1-phenylpropan-1-one, 4-(2-hydroxyethoxy)phe-nyl-(2-hydroxy)-2-propyl ketone, and 1-hydroxycyclohexyl phenyl ketone; benzoin alkyl ethers, such as benzoin methyl ether, benzoin ethyl ether, benzoin isopropyl ether, and benzoin isobutyl ether;benzophenone derivatives, such as methyl o-benzoyl benzoate, 4-phenyl benzophenone, 4-benzoyl-4'-methyl-diphenyl sulfide, and (4-benzoyl-benzyl)trimethyl ammonium chloride;thioxanthone-based compounds; acylphosphine oxide derivatives, such as bis(2,4,6-trimethylbenzoyl)-phenyl phosphine oxide and diphenyl (2,4,6-trimethylbenzoyl)-phosphine oxide; and azo compounds, such as 2-hydroxy-methyl-propionitrile and 2,2'-(azo-bis(2-methyl-N-(1,1'-bis(hydroxymethyl)-2-hydroxyethyl)propionamide).They may be used alone or in a mixture of two or more thereof.

The thermopolymerization initiator is not particularly limited, but examples thereof include an azo-based initiator, a peroxide-based initiator, a redox-based initiator, and an organic halide-based initiator. They can be used alone or in a mixture of two or more thereof. Specific examples of the thermopolymerization initiator may include, but are not limited to, sodium persulfate (Na₂S₂O₈) and potassium persulfate (K₂S₂O₈).

In the monomer composition 5, the content of each of the photopolymerization initiator and the thermopolymerization initiator can be selected and used, if effects of polymerization initiation can be exhibited. In exemplary embodiment, the photopolymerization initiator may be contained in the monomer composition in an amount of 0.005 to 0.1 parts by weight based on 100 parts by weight of the monomer, and the thermopolymerization initiator may be contained in the monomer composition in an amount of 0.01 to 0.5 parts by weight based on 100 parts by weight of the monomer, but the contents thereof are not limited thereto.

As the cross-linker, a cross-linker having at least one functional group and at least one unsaturated ethylenic group which can react with a substituent of the monomer, or a cross-linker having two or more functional groups which can react with a substituent of the monomer and/or a substituent formed by hydrolysis of the monomer can be used.

In exemplary embodiment, examples of the cross-linker may include bisacrylamide having 8 to 12 carbon atoms, bismethacrylamide having 8 to 12 carbon atoms, poly(meth)acrylate of a polyol having 2 to 10 carbon atoms, and poly(meth)allyl ether of a polyol having 2 to 10 carbon atoms. Specific examples of the cross-linker include, but are not limited to, N,N'-methylene bis(meth)acrylate, ethyleneoxy (meth)acrylate, polyethyleneoxy (meth)acrylate, propyleneoxy (meth)acrylate, glycerol diacrylate, glycerol triacrylate, trimethyloltriacrylate, triallylamine, triarylcyanurate, triallylisocyanate, polyethylene glycol, diethylene glycol, propylene glycol, and mixtures of two or more thereof.

In the monomer composition 5, the content of the cross-linker may be appropriately selected and used, if effects of cross-linkage can be exhibited. In exemplary embodiment, the cross-linker can be contained in an amount of 0.01 to 0.5 parts by weight, based on 100 parts by weight of the monomer, but the content thereof is not limited thereto.

The method for manufacturing a super absorbent polymer may further include the step of discharging the polymer formed by polymerizing the monomer composition 5 to the discharge unit 6.The method may further include the step of pulverizing, drying and further pulverizing the polymer discharged to the discharge unit 6.

The method of pulverizing the polymer is not particularly limited, but, for example, an apparatus for cutting and extruding a rubber-like elastic body may be used. In exemplary embodiment, examples thereof may include, but are not limited to, a blade cutter, a chop cutter, a kneading cutter, a vibration pulverizer, an impact pulverizer, and a friction pulverizer.

In the method of drying the polymer, generally, a dryer and a furnace can be used. In exemplary embodiment, examples thereof may include, but are not limited to, a hot-air dryer, a fluid-bed dryer, a flash dryer, an infrared dryer, a dielectric heating dryer. Drying temperature is not particularly limited, but may be 100°C to 200°C in terms of thermal degradation prevention and efficient drying.

While exemplary embodiments have been shown and described above, it will be apparent to those skilled in the art that modifications and variations could be made without departing from the spirit and scope of the invention as defined by the appended claims. The exemplary embodiments should be considered in a descriptive sense only and not for purposes of limitation.

## Claims

1. An apparatus for manufacturing a super absorbent polymer, comprising:
a belt installed over two or more rotary shafts and moved in a predetermined direction by the rotation of the rotary shafts;
a supply unit supplying a monomer composition to the belt; and
a cover covering at least a part of the belt and passing the belt from one side thereof to the other side thereof, wherein the belt includes a horizontal bottom, and lateral jaws provided at both ends of the belt at an angle of 30° to 70° to the horizontal bottom, and
the cover includes heat inlets for supplying heat into the coverat both lateral sides thereof.

2. The apparatus of claim 1,
wherein the cover further includes a light irradiation unit for emitting light to the inside thereof.

3. The apparatus of claim 2,
wherein the light irradiation unit emits ultraviolet rays from the top portion of the cover.

4. The apparatus of claim 2,
wherein the light irradiation unit is at least one selected from the group consisting of a Xe lamp, a mercury lamp, and a metal halide lamp.

5. The apparatus of claim 1,
wherein the cover further includes an outlet.

6. The apparatus of claim 5,
wherein the outlet is located at the top portion of the cover.

7. The apparatus of claim 1,
wherein each of the lateral jaws of the belt is made of at least one selected from the group consisting of silicone, rubber, and Teflon.

8. The apparatus of claim 1, further comprising:
a discharge unit for discharging a polymer obtained by the polymerization of the monomer composition.

9. A method for manufacturing a super absorbent polymer using the apparatus of any one of claims 1 to 8, comprising:
supplying the monomer composition onto the bottom of the belt through the supply unit;
carrying the belt into the cover; and
polymerizing the monomer composition in the cover.

10. The method of claim 9,
wherein the monomer composition includes:
one or more anionic monomers or salts thereof selected from the group consisting of acrylic acid, methacrylic acid, anhydrous maleic acid, fumaric acid, crotonic acid, itaconic acid, 2-acryloylethanesulfonic acid, 2-methacryloylethanesulfonic acid, 2-(meth)acryloylpropane sulfonic acid, and 2-(meth)acrylamide-2-methylpropane sulfonic acid;
one or more non-ionic monomers having hydrophilicity selected from the group consisting of (meth)acrylamide, N-substituted (meth)acrylate, 2-hydroxyethyl (meth)acrylate, 2-hydroxypropyl (meth)acrylate, methoxy polyethylene glycol (meth)acrylate, and polyethylene glycol (meth)acrylate; or
one or more unsaturated monomers containing an amino group or quaternary salts thereof selected from the group consisting of (N,N)-dimethylaminoethyl (meth)acrylate and (N,N)-dimethylaminopropyl (meth)acrylamide.

11. The method of claim 10,
wherein the monomer composition further includes at least one additive selected from the group consisting of a photopolymerization initiator, a thermopolymerization initiator, and a cross-linker.

12. The method of claim 9,
wherein the polymerizing of the monomer composition is performed by thermopolymerization, photopolymerization, or thermopolymerization and photopolymerization.

13. The method of claim 9, further comprising:
discharging the polymer formed in the polymerizing of the monomer composition through the discharge unit.

14. The method of claim 13, further comprising:
cutting the polymer discharged through the discharge unit;
drying the cut polymer; and
pulverizing the dried polymer.
